# EUROPEAN PATENT SPECIFICATION

(11) **EP 3 934 028 B1**
(45) Date of publication and mention of the grant of the patent: **10.05.2023**
(21) Application number: 21192802.3
(22) Date of filing: 11.12.2014
(51) Int. Cl.: H01R 13/629, H01R 43/26, H01R 13/645

(54) **LEVER ACTUATED ELECTRICAL CENTER ASSEMBLY**
HEBELBETÄTIGTE ELEKTRISCHE ZENTRALE ANORDNUNG
ENSEMBLE CENTRE DE DISTRIBUTION ÉLECTRIQUE ACTIONNÉ PAR LEVIER

(30) Priority: 13.12.2013 US 201314105616
(43) Date of publication of application: 05.01.2022
(62) Divisional of application: 14197263.8
(73) Proprietor: Yazaki North America, Inc., Canton, MI 48187 (US)
(72) Inventor: Mauney, Joseph A., Canton, 48187 (US); Naegelin, Conrad, Canton, 48187 (US); Stock, Chris W., Canton, 48187 (US); Liu, Jeffrey L., Canton, 48187 (US)
(74) Representative: Witte, Weller & Partner Patentanwälte mbB

(56) References cited:
- EP-A2- 0 938 162
- WO-A1-2011/107416
- WO-A1-2014/046877
- GB-A- 2 300 767
- US-A1- 2006 040 536
- US-B1- 6 824 406

## Description

### FIELD

The present disclosure relates to a lever actuated connector assembly that is suited for use in coupling a junction box assembly or electric center to a vehicle electrical system.

### BACKGROUND

This section provides background information related to the present disclosure which is not necessarily prior art.

Modern vehicles typically employ a junction box assembly, also known as an electric center, for the central mounting of various electric hardware, such as relays and fuses, in a centralized manner that permits several wire harnesses to be connected the junction box assembly. Prior designs typically included a mounting bracket and a junction box that were coupled together via one or more threaded fasteners. It is desirable, however, to avoid the use of threaded fasteners when possible so that more recent designs have been proposed that employ a single cam, a single slide or double levers. The international patent application WO 2011/107416 A1, teaches a connector assembly according to the preamble of claim 1, comprising a first connector element and a second connector element carrying respective contacts, and interconnected so as to be movable, along a coupling direction, between an uncoupled state and a coupled state. We have found that these designs require a relatively large force to couple the junction box to the bracket and moreover can be rather large in size. Accordingly, an improved connector assembly is needed in the art.

### SUMMARY

This section provides a general summary of the disclosure, and is not a comprehensive disclosure of its full scope or all of its features of the invention which is defined in the appended claims.

The problems found in prior art are solved by providing a connector assembly according to claim 1 that includes first and second connector portions. The first connector portion has a first connector housing, a pair of cam track structures and a lever. The first connector housing is configured to support a plurality of first terminals. The cam track structures are slidably coupled to opposite sides of the first connector housing for movement between a retracted position and an extended position. Each of the cam track structures has at least one cam track. The lever is pivotally coupled to the first connector housing for movement between a lowered position and a raised position. The lever is coupled to the cam track structures such that the cam track structures are in the retracted position when the lever is in the lowered position and the cam track structures are in the extended position when the lever is in the raised position. The second connector portion has a second connector housing and a plurality of cam followers. The second connector housing is configured to support a plurality of second terminals. Each of the cam followers is fixedly coupled to the second connector housing and received in a corresponding one of the cam tracks. The cam tracks are configured to cooperate with the cam followers to draw the first connector housing toward the second connector housing when the lever is moved from the raised position to the lowered position. The cam tracks are also configured to cooperate with the cam followers to urge the first connector housing away from the second connector housing when the lever is moved from the lowered position to the raised position.

In another form, the present invention provides a method according to claim 11 for installing a junction box assembly to a vehicle electrical system. The junction box assembly is a first connector portion and has a first connector housing, a pair of cam track structures and a lever. The first connector housing supports a plurality of first terminals. The cam track structures are slidably coupled to opposite sides of the first connector housing for movement between a retracted position and an extended position. Each of the cam track structures has at least one cam track. The lever is pivotally coupled to the first connector housing for movement between a lowered position and a raised position. The lever is coupled to the cam track structures such that the cam track structures are in the retracted position when the lever is in the lowered position and the cam track structures are in the extended position when the lever is in the raised position. The method includes: providing a second connector portion having a second connector housing and a plurality of cam followers; inserting a plurality of wire harness connectors into the second connector housing, each of the wire harness connectors having a plurality of second terminals; pre-staging the junction box assembly to the second connector portion such that the first connector housing is aligned to the second connector housing in a predetermined manner; moving the lever from the lowered position to the raised position to align an insertion portion of each cam track to a corresponding one of the cam followers; and moving the lever from the raised position to the lowered position to drive the first connector housing toward the wire harness connectors and engage the first terminals to the second terminals.

Further areas of applicability will become apparent from the description provided herein. The description and specific examples in this summary are intended for purposes of illustration only and are not intended to limit the scope of the present disclosure defined by the appended claims.

### DRAWINGS

The drawings described herein are for illustrative purposes only of selected embodiments and not all possible implementations.
Figure 1 is a perspective view of an exemplary connector assembly constructed in accordance with the teachings of the present disclosure;
Figure 2 is an exploded perspective view of the connector assembly of Figure 1;
Figure 3 is a sectional view taken along the line 3-3 of Figure 1;
Figure 4 is a perspective view of the connector assembly of Figure 1 with first and second connector portions being positioned in a pre-stage position;
Figure 5 is an enlarged portion of Figure 4 illustrating a keying system in more detail;
Figure 6 is an enlarged portion of the first connector portion illustrating a cam track lock in more detail;
Figure 7 is an enlarged portion of Figure 4 illustrating an unlocking member on the second connector portion interacting with the cam track lock on the first connector portion;
Figure 8 is a sectional view of a portion of the first connector portion illustrating a cam track structure in more detail;
Figure 9 is a perspective view of an alternately constructed cam track structure;
Figure 10 is a perspective view of the connector assembly of Figure 1 with the first and second connector portions engaged to one another, a lever of the first connector portion in a raised position and the cam track structures of the first connector portion in an extended position;
Figure 11 is a section view taken along the line 11-11 of Figure 10;
Figure 12 is a section view taken along the line 12-12 of Figure 10; and
Figure 13 is a section view taken along the line 13-13 of Figure 1.

Corresponding reference numerals indicate corresponding parts throughout the several views of the drawings.

### DETAILED DESCRIPTION

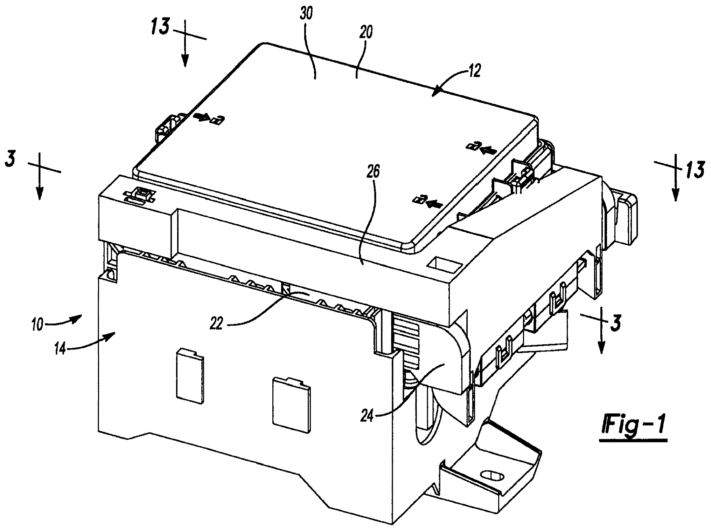

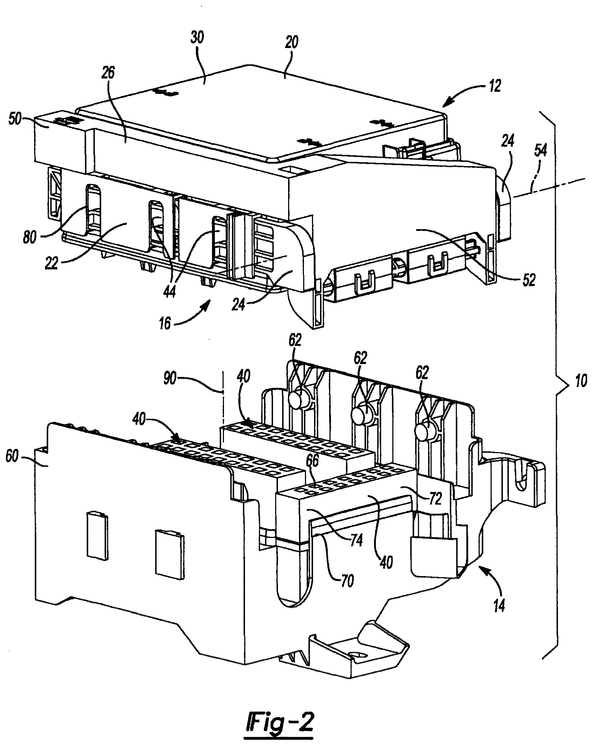

With reference to Figures 1 and 2, a connector assembly constructed in accordance with the teachings of the present disclosure is generally indicated by reference numeral 10. In the particular example provided, the connector assembly 10 is employed to connect a junction box assembly to a vehicle electrical system, but those of skill in the art will appreciate that the teachings of the present disclosure have application to various other situations. The connector assembly 10 can include a first connector portion 12, a second connector portion 14 and a keying system 16.

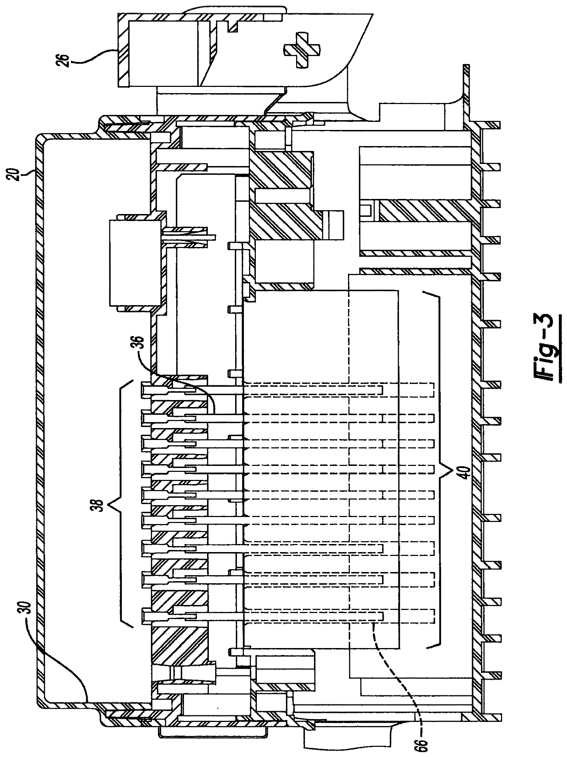

With reference to Figures 2 and 3, the first connector portion 12 can comprise a junction box assembly 20, a pair of cam track housings 22, a pair of cam track structures 24 and a lever 26. The junction box assembly 20 can include a first connector housing 30 and a plurality of conventional "junction box components" that can include circuit boards, relays, fuses, bus bars, etc. Various elements of the "junction box components" can have terminals (i.e., first terminals 36) that can be coupled to and supported by the first connector housing 30. While the arrangement of the first terminals 36 relative to the first connector housing 30 may be varied in any desired manner, the first terminals 36 in the particular example provided are disposed in a plurality of first terminal sets 38 that are configured to matingly engage corresponding second terminal sets 40 that are associated with the second connector portion 14 as will be described in detail, below. The cam track housings 22 can be coupled to opposite sides of the first connector housing 30 and can define a space in which an associated one of the cam track structures 24 is slidably received. Each of the cam track structures 24 can define one or more cam tracks 44. The lever 26 can include a handle 50 and a yoke 52 that can be pivotally mounted to the first connector housing 30 for pivoting motion about a lever axis 54. The cam track structures 24 are pivotally mounted to the yoke 52 at a location that is offset from the lever axis 54 such that pivoting of the lever 26 between a lowered position and a raised position will cause corresponding translation of the cam track structures 24 in the cam track housings 22 between a retracted position and an extended position.

The second connector portion 14 includes a mounting bracket or second connector housing 60 and a plurality of cam followers 62. The second connector housing 60 can be configured to be coupled to a plurality of second terminals 66 that are adapted to matingly engage and electrically couple to the first terminals 36. In the example provided, the second connector housing 60 defines a plurality of connector mounts 70, each of which being configured to matingly engage a discrete wire harness connector 72 that terminates an end of an associated wire harness (not shown) and comprises a wire harness connector housing 74 and a plurality of terminals (i.e., second terminals 66 arranged in second terminal sets 40). In the example provided, each connector mount 70 is configured to engage (only) a corresponding one of the wire harness connector housings 74 in a predetermined manner so that the corresponding second terminal set 40 is aligned to the second connector housing 60 in a predetermined manner along three orthogonal axes. Each of the cam followers 62 are fixedly coupled to the second connector housing 60 and configured to engage a corresponding one of the cam tracks 44 on the cam track structures 24. It will be appreciated that the cam tracks 44 and the cam followers 62 can be configured in any desired manner.

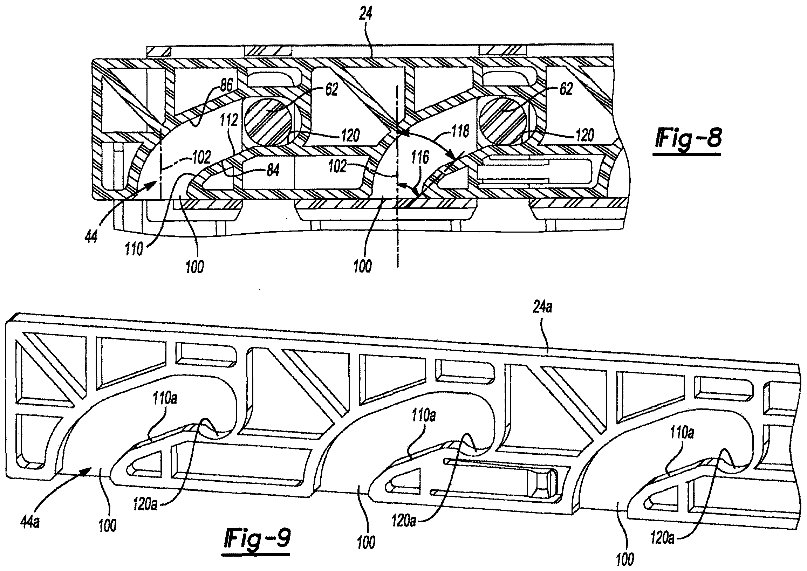

With reference to Figures 2 and 8, the cam followers 62 comprise cylindrical posts that are fixedly coupled to opposite sides of the second connector housing 60, while each of the cam tracks 44 comprises a groove or channel that is configured to receive the cylindrical post of an associated one of the cam followers 62 therein. U-shaped apertures 80 are formed in the cam track housings 22 to permit the cam followers 62 to be received therethrough and into the cam tracks 44.

Each cam track 44 can have a coupling side 84 and a decoupling side 86. Each of the coupling sides 84 is configured to contact an associated one of the cam followers 62 when the lever is moved from the raised position to the lowered position to move the cam track structures 24 relative to the cam followers 62 in a coupling direction (i.e., along a coupling axis 90) such that the first connector housing 30 is urged toward the second connector housing 60. The decoupling side 86 can be configured in a manner that is similar to the coupling side 84 and as such will not be described in detail herein other than to note that the decoupling side 86 is configured to contact the cam follower 62 when the lever 26 is moved from the lowered position to the raised position to thereby coordinate movement of the cam track structures 24 relative to the cam followers 62 in a direction opposite the coupling direction such that the first connector housing 30 is urged away from the second connector housing 60 along the coupling axis 90.

The coupling side 84 can include an insertion portion 100, which is disposed along an insertion axis 102 and generally parallel to the coupling axis 90, and at least one transition portion that is configured to move the cam track structures 24 relative to the cam followers 62 along the insertion axis 102 as the cam track structures 24 are moved between the extended and retracted positions. In the particular example provided, each coupling side 84 includes a first transition portion 110 and a second transition portion 112. The first transition portion 110 can be a straight segment that can be configured such that a first included angle 116 is disposed between it and the insertion axis 102. The second transition portion 112 can be a straight segment that can be configured such that a second included angle 118 is disposed between it and the insertion axis 102. The first included angle 116 can be smaller than the second included angle 118 and can be positioned relative to the "stroke" of the cam track structures 24 along the insertion axis 102 to contact the cam followers 62 when the first terminals 36 (Fig. 3) begin to engage the second terminals 66 (Fig. 3). Configuration in this manner permits a relatively higher level of force to be exerted on the first terminals 36 (Fig. 3) when they are engaging the second terminals 66 (Fig. 3) and a relatively reduced force on the first terminals 36 when they have been engaged to the second terminals 66 and are being "seated" to the second terminals 66. The coupling sides 84 can terminate at a dwell portion 120 that can be configured to maintain the cam track structures 24 at a desired orientation or position relative to the cam followers 62 along the insertion axis 102 as the lever 26 is moved to toward the lowered position.

An alternately constructed cam track structure 24a is depicted in Figure 9. The cam track structure 24a defines a plurality of cam tracks 44a having a single transition portion 110a and terminating at a back-angled portion 120a. The single transition portion 110a comprises a straight segment that extends between the insertion portion 100 and the back-angled portion 120a. The back-angled portion 120a is configured to cooperate with the cam followers 62 (Fig. 2) to slightly withdraw the first terminals 36 (Fig. 3) from the second terminals 66 (Fig. 3) as the cam track structures 24a are moved into the retracted position. Additionally, the positioning of the cam followers 62 (Fig. 2) at the distal end of the back-angled portion 120a tends to lock the cam track structures 24 in the retracted position.

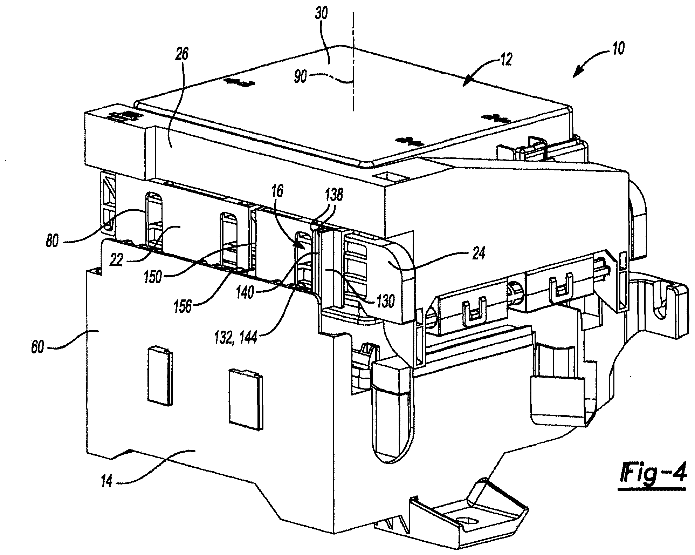

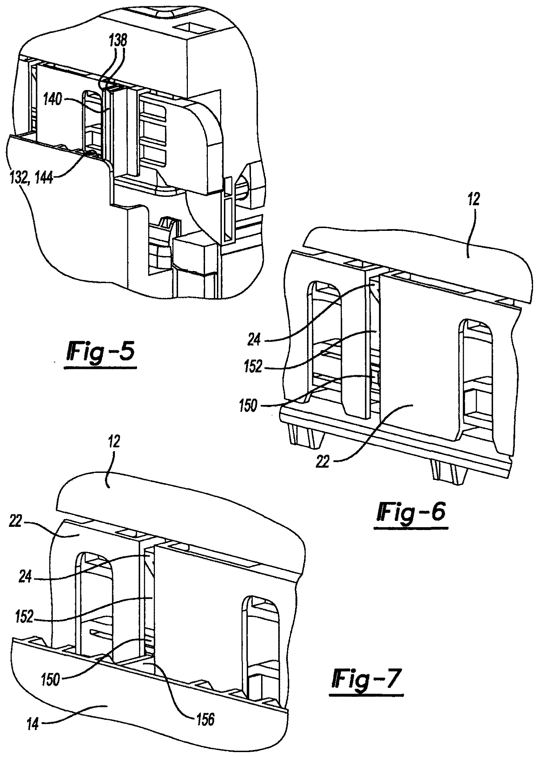

With reference to Figures 4 and 5, the keying system 16 can have a first key member 130, which can be coupled to the first connector portion 12, and a second key member 132 that can be coupled to the second connector portion 14. The keying system 16 is configured to permit the first connector housing 30 to be mated or inserted to the second connector housing 60 only when the first and second key members 130 and 132 are engaged to one another. The first key member 130 can comprise a pair of first ribs 138 that are coupled to one of the cam track housings 22 and cooperate to define a keying groove 140 that extends generally parallel to the coupling axis 90. The second key member 132 can comprise a second rib 144 that can be sized to be received in the keying groove 140 when the first connector housing 30 is aligned to the second connector housing 60 in a predetermined manner. The first and second ribs 138 and 144 can be configured to contact the second connector housing 60 and one of the cam track housings 22, respectively, if the first connector housing 30 is not aligned to the second connector housing 60 in the predetermined manner and an attempt is made to insert the first connector housing 30 to the second connector housing 60.

With reference to Figure 2, an exemplary method for assembling and coupling the connector assembly 10 to a vehicle electric system will be described. The second connector portion 14 can be coupled to the vehicle electrical system and fixedly secured to a vehicle. In this regard, the several wire harness connectors 72 can be received in the connector mounts 70 such that the wire harness connector housings 74 are fixedly (but removably) mounted to the second connector housing 60 in their predetermined orientations.

In Figures 4 and 5, the first connector portion 12 can be mounted to the second connector portion 14 in a pre-stage condition such that the second rib 144 is disposed in the keying groove 140 and the cam followers 62 (Fig. 2) are received in the U-shaped apertures 80 formed in the cam track housings 22. Optionally, the first connector portion 12 can have a lock that cooperates with another portion of the first connector portion 12 to inhibit movement of the cam track structures 24 from the retracted position toward the extended position and/or the lever 26 from the lowered position toward the raised position.

With reference to Figures 6 and 7, the first connector portion 12 comprises a cam track lock 150 that is formed on one of the cam track structures 24. The cam track lock 150 extends into a slot 152 formed in one of the cam track housings 22 when the cam track structures 24 are disposed in the retracted position. It will be appreciated that contact between the cam track lock 150 and the cam track housing 22 will inhibit movement of the cam track structure 24 toward the extended position, to thereby inhibit movement of the lever 26 (Fig. 4) toward the raised position, as well as corresponding movement of the other one of the cam track structures 24 toward the extended position. The second connector portion 14 includes a rib or unlocking member 156 that can extend through the slot 152 and resiliently urge the cam track lock 150 out of alignment with the side of the cam track housing 22 so that the cam track structures 24 may be moved from the retracted position to the extended position.

It will be appreciated that when the first connector portion 12 is decoupled from the second connector portion 14, contact between the cam track lock 150 and the edge of the slot 152 in the cam track housing 22 will inhibit movement of the cam track structures 24 from the retracted position toward the extended position to thereby inhibit movement of the lever 26 (Fig. 4) from the lowered position toward the raised position. It will further be appreciated that positioning of the first connector portion 12 relative to the second connector portion 14 in the pre-stage position positions the unlocking member 156 in the slot 152 such that the unlocking member 156 resiliently urges the cam track lock 150 out of alignment with the side of the cam track housing 22 so that the cam track structures 24 can be moved toward the extended position.

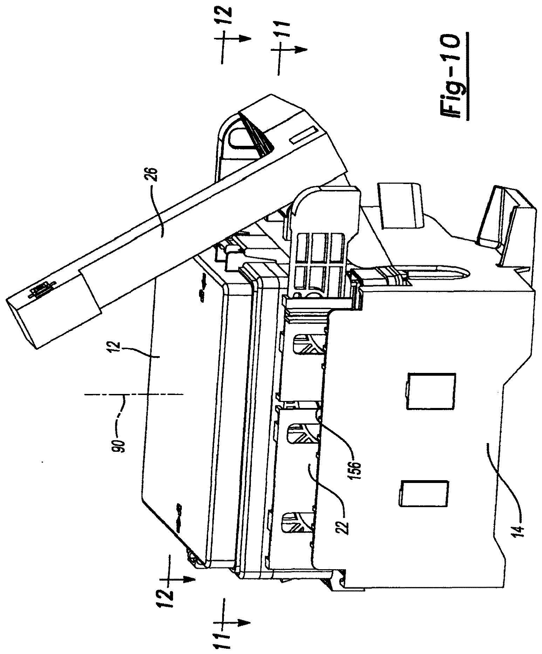

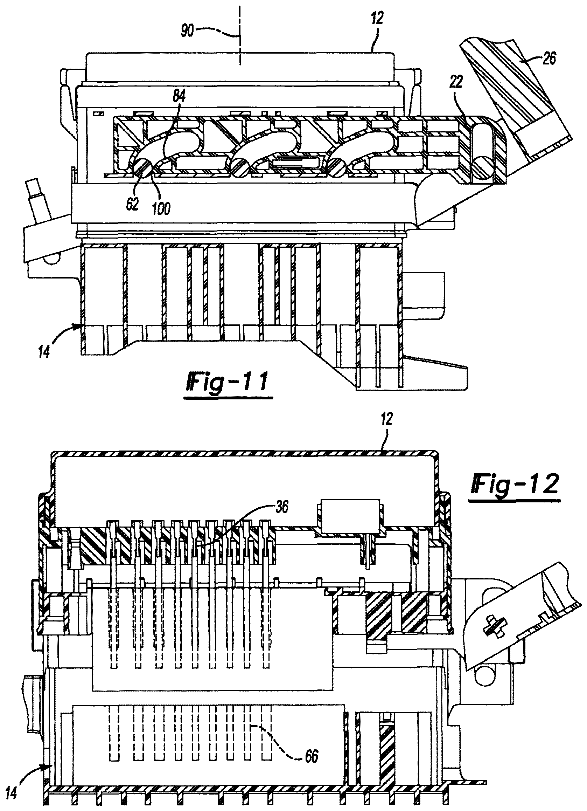

With reference to Figures 10 through 12, when the first and second connector portions 12 and 14 are disposed in the pre-stage position and the unlocking member 156 has unlocked the cam track lock 150 (Fig. 5) from the cam track housing 22, the lever 26 can be moved from the lowered position to the raised position to align the insertion portion 100 of the cam tracks 44 to the cam followers 62. Due to the weight of the first connector portion 12 and/or through the application of force onto the first connector portion 12 that tends to urge the first connector portion 12 toward the second connector portion 14 in the coupling direction, the first connector portion 12 can be urged toward the second connector portion 14 along the coupling axis 90 such that the cam followers 62 are received into the insertion portion 100 of the cam tracks 44.

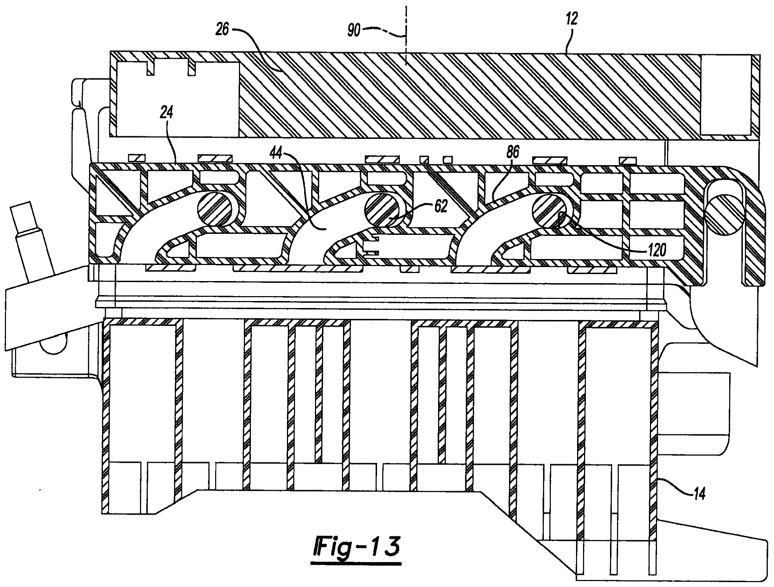

The lever 26 can be rotated from the raised position to the lowered position to move the cam track structures 24 from the extended position to the retracted position. The coupling side 84 of the cam tracks 44 can cooperate with the cam followers 62 to drive the first connector portion 12 in the coupling direction toward the second connector portion 14 along the coupling axis 90 to thereby drive the first terminals 36 into contact with the second terminals 66 to electrically connect and seat the first terminals 36 to the second terminals 66. Figures 1, 3 and 13 depict various views of the connector assembly 10 when the lever 26 is in the lowered position and the first terminals 36 are electrically connected to and seated against the second terminals 66.

Once coupled in this manner, the lever 26 can be rotated from the lowered position to the raised position to move the cam track structures 24 from the retracted position to the extended position. The decoupling side 86 of the cam tracks 44 can cooperate with the cam followers 62 to drive the first connector portion 12 in the decoupling direction away from the second connector portion 14 along the coupling axis 90 to thereby decouple the first terminals 36 from the second terminals 66.

## Claims

1. A connector assembly (10) comprising:
a first connector portion (12) having a first connector housing (30), a pair of cam track structures (24) and a lever (26), each of the cam track structures (24) pivotally mounted to a yoke (52) at a location that is offset from a lever axis (54), the lever (26) being pivotally coupled to the first connector housing (30) for movement between a lowered position and a raised position, the lever (26) being coupled to the cam track structures (24) such that the cam track structures are in a retracted position when the lever is in the lowered position and the cam track structures (24) are in an extended position when the lever is in the raised position;
a second connector portion (14) having a second connector housing (60) and a plurality of cam followers (62), the second connector housing (60) being adapted to support a plurality of wire harness connectors (72), each of the cam followers (62) being fixedly coupled to the second connector housing (60) and received through an U-shape aperture and in a corresponding one of the cam tracks (44);
wherein the first connector portion (12) comprises a cam track lock (150) that cooperates with another portion of the first connector portion (12) when the first connector portion is decoupled from the second connector portion (14) to inhibit movement of at least one of the cam track structures (24) from the retracted position toward the extended position to thereby inhibit movement of the lever from the lowered position toward the raised position; and
**characterized in that** the second connector housing (60) comprises a rib (156) that urges the cam track lock (150) out of engagement with the another portion of the first connector portion.

2. The connector assembly of Claim 1, wherein each of the cam track structures (24) is slidably housed in a cam track housing (22), the cam track structures (24) being slidably coupled to opposite sides of the first connector housing (30) for movement between a retracted position and an extended position.

3. The connector assembly of Claim 1 or 2, wherein the other portion of the first connector portion (12) comprises at least one of the cam track housings (22).

4. The connector assembly of Claim 1, 2 or 3, wherein the rib (138) is received into a slot (152) in the first connector portion.

5. The connector assembly of any of Claims 1 to 4, wherein each cam follower (62) is received into a corresponding one of the cam tracks (44) along an insertion axis, wherein each cam track (44) comprises a first transition portion (110) and a second transition portion (112), wherein an included angle (116) between the first transition portion and the insertion axis has a first magnitude, and wherein an included angle (118) between the second transition portion and the insertion axis has a second, larger magnitude.

6. The connector assembly of Claim 5, wherein the first connector housing (30) is adapted to support a plurality of first terminals (36) and the second connector housing is adapted to support a plurality of second terminals (66), the first transition portion (110) is timed to occur when the first terminals (36) begin to engage the second terminals (66).

7. The connector assembly of any of Claim 5 or 6, wherein each cam track (44) terminates at a back-angled portion, the back-angled portions cooperating with the cam followers (62) to slightly withdraw the first terminals (36) from the second terminals (66) as the cam track structures (24) are moved into the retracted position and to lock the cam track structures (24) into the retracted position.

8. The connector assembly of any of the preceding Claims, further comprising a keying system (16) having a first key member (130) and a second key member (132), the first key member (130) being coupled to the first connector portion (12), the second key member (132) being coupled to the second connector portion (14), the keying system (16) being configured to cooperate with at least one of the first and second connector housings (30, 60) to permit insertion of the first connector housing (30) to the second connector housing (60) only when the first and second key members (130, 132) are engaged to one another.

9. The connector assembly of any of the preceding Claims, wherein each of the cam followers (62) are received through the U-shape aperture (80) formed in the first connector portion and into in a corresponding one of the cam tracks (44).

10. The connector assembly of any of the preceding Claims, wherein the cam tracks (44) are configured to cooperate with the cam followers (62) to draw the first connector housing (30) toward the second connector housing (60) when the lever (26) is moved from the raised position to the lowered position, and wherein the cam tracks (44) are configured to cooperate with the cam followers (62) to urge the first connector housing (30) away from the second connector housing ( 60) when the lever (26) is moved from the lowered position to the raised position.

11. A method for installing the connector assembly according to any of Claims 1 to 10 to a vehicle electrical system, the method comprising:
providing the first connector portion (12) and the second connector portion (14);
inserting the plurality of wire harness connectors (72) into the second connector housing (60);
pre-staging the first connector portion (12) to the second connector portion (14) such that the first connector housing (30) is aligned to the second connector housing (60) in a predetermined manner;
moving the lever (26) from the lowered position to the raised position to align an insertion portion of each cam track (44) to a corresponding one of the cam followers (62); and
moving the lever (26) from the raised position to the lowered position to drive the first connector housing (30) toward the wire harness connectors (72) and engage the first terminals to the second terminals;
wherein pre-staging the first connector portion (12) to the second connector portion comprises de-activating a lock on the first connector portion that_inhibits sliding of at least one of the cam tracks (44) from the retracted position, pivoting of the lever from the lowered position, or both.

12. The method of Claim 11, further comprising permitting insertion of the first connector housing (30) into the second connector housing (30) only when a first key member (130) of a keying system and a second key member of the keying system are engaged with each other, the first key member being coupled to the first connector portion, the second key member being keyed to the second connector portion.

13. The method of Claim 12, wherein the keying system (16) inhibits prestaging the first connector portion to the second connector portion if the first connector housing is not aligned to the second connector housing in the predetermined manner.

14. The method of any of Claims 11 to 13, further comprising:
varying an insertion force that is generated when the lever (26) is moved from the raised position to the lowered position and a given input force is applied to the lever; and
maximizing the insertion force for a given input force during a portion of a stroke of the first terminals that includes engagement of the first terminals (36) to the second terminals (6).

15. The method of any of Claims 11 to 14, wherein pre-staging the first connector portion (12) to the second connector portion (14) includes the plurality of cam followers (62) being received through U-shape apertures (80) formed in the cam track housing (22).

## Patentansprüche

1. Verbinderanordnung (10), die Folgendes aufweist:
einen ersten Verbinderteil (12) mit einem ersten Verbindergehäuse (30), einem Paar von Kurvenbahnstrukturen (24) und einem Hebel (26), wobei jede der Kurvenbahnstrukturen (24) schwenkbar an einem Joch (52) an einer Stelle montiert ist, die von einer Hebelachse (54) versetzt ist, wobei der Hebel (26) schwenkbar mit dem ersten Verbindergehäuse (30) für eine Bewegung zwischen einer abgesenkten Position und einer angehobenen Position gekoppelt ist, der Hebel (26) mit den Kurvenbahnstrukturen (24) so gekoppelt ist, dass sich die Kurvenbahnstrukturen in einer zurückgezogenen Position befinden, wenn sich der Hebel in der abgesenkten Position befindet, und sich die Kurvenbahnbahnstrukturen (24) in einer ausgefahrenen Position befinden, wenn sich der Hebel in der angehobenen Position befindet;
einen zweiten Verbinderteil (14) mit einem zweiten Verbindergehäuse (60) und einer Vielzahl von Kurvenabtastgliedern (62), wobei das zweite Verbindergehäuse (60) dazu ausgelegt ist, eine Vielzahl von Kabelbaumverbindern (72) zu tragen, wobei jedes der Kurvenabtastglieder (62) fest mit dem zweiten Verbindergehäuse (60) gekoppelt ist und durch eine U-förmige Öffnung und in einer entsprechenden der Kurvenbahnen (44) aufgenommen ist;
wobei der erste Verbinderteil (12) eine Kurvenbahnverriegelung (150) umfasst, die mit einem anderen Abschnitt des ersten Verbinderteils (12) zusammenwirkt, wenn der erste Verbinderteil von dem zweiten Verbinderteil (14) entkoppelt ist, um eine Bewegung von mindestens einer der Kurvenbahnstrukturen (24) aus der eingezogenen Position in Richtung der ausgefahrenen Position zu verhindern, um dadurch eine Bewegung des Hebels aus der abgesenkten Position in Richtung der angehobenen Position zu verhindern; und
wobei das zweite Verbindergehäuse (60) eine Rippe (156) aufweist, die die Kurvenbahnverriegelung (150) aus dem Eingriff mit dem anderen Abschnitt des ersten Verbinderteils drückt.

2. Verbinderanordnung nach Anspruch 1, wobei jede der Kurvenbahnstrukturen (24) verschiebbar in einem Kurvenbahngehäuse (22) untergebracht ist, wobei die Kurvenbahnstrukturen (24) verschiebbar mit gegenüberliegenden Seiten des ersten Verbindergehäuses (30) für eine Bewegung zwischen einer eingezogenen Position und einer ausgefahrenen Position verbunden sind.

3. Verbinderanordnung nach Anspruch 1 oder 2, wobei der andere Teil des ersten Verbinderteils (12) mindestens eines der Kurvenbahngehäuse (22) umfasst.

4. Verbinderanordnung nach Anspruch 1, 2 oder 3, wobei die Rippe (138) in einem Schlitz (152) in dem ersten Verbinderteil aufgenommen ist.

5. Verbinderanordnung nach einem der Ansprüche 1 bis 4, wobei jedes Kurvenabtastglied (62) in einer entsprechenden der Kurvenbahnen (44) entlang einer Einsetzachse aufgenommen ist, wobei jede Kurvenbahn (44) einen ersten Übergangsabschnitt (110) und einen zweiten Übergangsabschnitt (112) aufweist, wobei ein eingeschlossener Winkel (116) zwischen dem ersten Übergangsabschnitt und der Einsetzachse eine erste Größe hat und wobei ein eingeschlossener Winkel (118) zwischen dem zweiten Übergangsabschnitt und der Einsetzachse eine zweite, größere Größe hat.

6. Verbinderanordnung nach Anspruch 5, wobei das erste Verbindergehäuse (30) so ausgelegt ist, dass es eine Vielzahl von ersten Anschlüssen (36) trägt, und das zweite Verbindergehäuse so ausgelegt ist, dass es eine Vielzahl von zweiten Anschlüssen (66) trägt, wobei der erste Übergangsabschnitt (110) zeitlich so festgelegt ist, dass er auftritt, wenn die ersten Anschlüsse (36) beginnen, mit den zweiten Anschlüssen (66) in Eingriff zu kommen.

7. Verbinderanordnung nach einem der Ansprüche 5 oder 6, wobei jede Kurvenbahn (44) an einem zurückgewinkelten Abschnitt endet, wobei die zurückgewinkelten Abschnitte mit den Kurvenabtastgliedern (62) zusammenwirken, um die ersten Anschlüsse (36) von den zweiten Anschlüssen (66) leicht zurückzuziehen, wenn die Kurvenbahnstrukturen (24) in die zurückgezogene Position bewegt werden, und um die Kurvenbahnstrukturen (24) in der zurückgezogenen Position zu verriegeln.

8. Verbinderanordnung nach einem der vorhergehenden Ansprüche, die ferner ein Eingriffssystem (16) mit einem ersten Eingriffsglied (130) und einem zweiten Eingriffsglied (132) umfasst, wobei das erste Eingriffsglied (130) mit dem ersten Verbinderteil (12) gekoppelt ist und das zweite Eingriffsglied (132) mit dem zweiten Verbinderteil (14) gekoppelt ist, das Schlüsselsystem (16) so konfiguriert ist, dass es mit mindestens einem der ersten und zweiten Verbindergehäuse (30, 60) zusammenwirkt, um das Einsetzen des ersten Verbindergehäuses (30) in das zweite Verbindergehäuse (60) nur dann zu ermöglichen, wenn das erste und das zweite Eingriffsglied (130, 132) miteinander in Eingriff sind.

9. Verbinderanordnung nach einem der vorhergehenden Ansprüche, wobei jedes der Kurvenabtastglieder (62) durch die U-förmige Öffnung (80), die in dem ersten Verbinderteil ausgebildet ist, und in einer entsprechenden der Kurvenbahnen (44) aufgenommen wird.

10. Verbinderanordnung nach einem der vorhergehenden Ansprüche, wobei die Kurvenbahnen (44) so konfiguriert sind, dass sie mit den Kurvenabtastgliedern (62) zusammenwirken, um das erste Verbindergehäuse (30) in Richtung des zweiten Verbindergehäuses (60) zu ziehen, wenn der Hebel (26) von der angehobenen Position in die abgesenkte Position bewegt wird, und wobei die Kurvenbahnen (44) so konfiguriert sind, dass sie mit den Kurvenabtastgliedern (62) zusammenwirken, um das erste Verbindergehäuse (30) von dem zweiten Verbindergehäuse (60) wegzudrücken, wenn der Hebel (26) von der abgesenkten Position in die angehobene Position bewegt wird.

11. Verfahren zum Einbau der Verbinderanordnung nach einem der Ansprüche 1 bis 10 in ein elektrisches System eines Fahrzeugs, wobei das Verfahren aufweist:
Bereitstellung des ersten Verbinderteils (12) und des zweiten Verbinderteils (14);
Einsetzen der Vielzahl von Kabelbaumsteckern (72) in das zweite Steckergehäuse (60);
Vorverlegung des ersten Verbinderteils (12) zum zweiten Verbinderteils (14), so dass das erste Verbindergehäuse (30) auf das zweite Verbindergehäuse (60) in einer vorbestimmten Weise ausgerichtet ist;
Bewegen des Hebels (26) von der abgesenkten Position in die angehobene Position, um einen Einführungsabschnitt jeder Kurvenbahn (44) auf einen entsprechenden der Kurvenabtastglieder (62) auszurichten; und
Bewegen des Hebels (26) von der angehobenen Position in die abgesenkte Position, um das erste Verbindergehäuse (30) zu den Kabelbaumverbindern (72) zu bewegen und die ersten Anschlüsse mit den zweiten Anschlüssen in Eingriff zu bringen;
wobei das Vorverschieben des ersten Verbinderteils (12) zu dem zweiten Verbinderteil das Deaktivieren einer Verriegelung an dem ersten Verbinderteil umfasst, die das Gleiten mindestens einer der Nockenbahnen (44) aus der zurückgezogenen Position, das Schwenken des Hebels aus der abgesenkten Position oder beides verhindert.

12. Verfahren nach Anspruch 11, das ferner umfasst, dass das Einsetzen des ersten Verbindergehäuses (30) in das zweite Verbindergehäuse (30) nur dann zugelassen wird, wenn ein erstes Eingriffsglied (130) eines Eingriffssystems und ein zweites Eingriffsglied des Eingriffssystems miteinander in Eingriff sind, wobei das erste Eingriffsglied mit dem ersten Verbinderteil gekoppelt ist und das zweite Eingriffsglied mit dem zweiten Verbinderteil gekoppelt ist.

13. Verfahren nach Anspruch 12, wobei das Eingriffssystem (16) das Vorspannen des ersten Verbinderteils an den zweiten Verbinderteil verhindert, wenn das erste Verbindergehäuse nicht in der vorgegebenen Weise auf das zweite Verbindergehäuse ausgerichtet ist.

14. Verfahren nach einem der Ansprüche 11 bis 13, ferner umfassend:
Variieren einer Einführungskraft, die erzeugt wird, wenn der Hebel (26) von der angehobenen Position in die abgesenkte Position bewegt wird und eine gegebene Eingangskraft auf den Hebel ausgeübt wird; und
Maximierung der Einsteckkraft für eine gegebene Eingangskraft während eines Abschnitts eines Hubs der ersten Anschlüsse, der den Eingriff der ersten Anschlüsse (36) mit den zweiten Anschlüssen (6) umfasst.

15. Verfahren nach einem der Ansprüche 11 bis 14, wobei das Vorverschieben des ersten Verbinderteils (12) zu dem zweiten Verbinderteils (14) beinhaltet, dass die Mehrzahl von Kurvenabtastgliedern (62) durch U-förmige Öffnungen (80) aufgenommen werden, die in dem Kurvenbahngehäuse (22) ausgebildet sind.

## Revendications

1. Ensemble connecteur (10) comprenant :
une première partie de connecteur (12) comportant un premier logement de connecteur (30), une paire de structures à chemins de mécanisme de came (24) et un levier (26), chacune des structures à chemins de mécanisme de came (24) étant fixée à pivotement sur un étrier (52) à un emplacement qui est décalé vis-à-vis d'un axe de levier (54), le levier (26) étant accouplé à pivotement avec le premier logement de connecteur (30) à des fins de déplacement entre une position abaissée et une position élevée, le levier (26) étant accouplé avec les structures à chemins de mécanisme de came (24) de telle sorte que les structures à chemins de mécanisme de came se trouvent dans une position rétractée lorsque le levier se trouve dans la position abaissée et les structures à chemins de mécanisme de came (24) se trouvent dans une position étendue lorsque le levier se trouve dans la position élevée ;
une seconde partie de connecteur (14) comportant un second logement de connecteur (60) et une pluralité de suiveurs de mécanisme de came (62), le second logement de connecteur (60) étant apte à supporter une pluralité de connecteurs de faisceaux de câbles (72), chacun des suiveurs de mécanisme de came (62) étant accouplé de manière fixe avec le second logement de connecteur (60) et reçu à travers une ouverture en forme de U et dans un chemin correspondant parmi les chemins de mécanisme de came (44) ;
la première partie de connecteur (12) comprenant un dispositif de blocage de chemin de mécanisme de came (150) qui coopère avec une autre partie de la première partie de connecteur (12) lorsque la première partie de connecteur est désaccouplée de la seconde partie de connecteur (14) afin d'empêcher un déplacement d'au moins une des structures à chemins de mécanisme de came (24) de la position rétractée vers la position étendue de façon à empêcher ainsi un déplacement du levier de la position abaissée vers la position élevée ; et
**caractérisé en ce que** le second logement de connecteur (60) comprend une nervure (156) qui pousse le dispositif de blocage de chemin de mécanisme de came (150) de façon à le séparer de ladite autre partie de la première partie de connecteur.

2. Ensemble connecteur selon la revendication 1, dans lequel chacune des structures à chemins de mécanisme de came (24) est logée à coulissement dans un logement de chemins de mécanisme de came (22), les structures à chemins de mécanisme de came (24) étant accouplées à coulissement avec des côtés opposés du premier logement de connecteur (30) à des fins de déplacement entre une position rétractée et une position étendue.

3. Ensemble connecteur selon la revendication 1 ou 2, dans lequel ladite autre partie de la première partie de connecteur (12) comprend au moins un des logements de chemins de mécanisme de came (22).

4. Ensemble connecteur selon la revendication 1, 2 ou 3, dans lequel la nervure (138) est reçue dans une fente (152) dans la première partie de connecteur.

5. Ensemble connecteur selon l'une quelconque des revendications 1 à 4, dans lequel chaque suiveur de mécanisme de came (62) est reçu dans un chemin correspondant parmi les chemins de mécanisme de came (44) le long d'un axe d'insertion, dans lequel chaque chemin de mécanisme de came (44) comprend une première partie de transition (110) et une seconde partie de transition (112), dans lequel un angle inclus (116) entre la première partie de transition et l'axe d'insertion a une première grandeur, et dans lequel un angle inclus (118) entre la seconde partie de transition et l'axe d'insertion a une seconde grandeur supérieure.

6. Ensemble connecteur selon la revendication 5, dans lequel le premier logement de connecteur (30) est apte à supporter une pluralité de premières bornes (36) et le second logement de connecteur est apte à supporter une pluralité de secondes bornes (66), la première partie de transition (110) est prévue pour être mise en oeuvre lorsque les premières bornes (36) commencent à entrer en prise avec les secondes bornes (66).

7. Ensemble connecteur selon l'une quelconque des revendications 5 et 6, dans lequel chaque chemin de mécanisme de came (44) se termine au niveau d'une partie en dépouille, les parties en dépouille coopérant avec les suiveurs de mécanisme de came (62) afin de retirer légèrement les premières bornes (36) des secondes bornes (66) lorsque les structures à chemins de mécanisme de came (24) sont déplacées vers la position rétractée et afin de bloquer les structures à chemins de mécanisme de came (24) dans la position rétractée.

8. Ensemble connecteur selon l'une quelconque des revendications précédentes, comprenant, en outre, un système de clavetage (16) comportant un premier élément de clavetage (130) et un second élément de clavetage (132), le premier élément de clavetage (130) étant accouplé avec la première partie de connecteur (12), le second élément de clavetage (132) étant accouplé avec la seconde partie de connecteur (14), le système de clavetage (16) étant conçu pour coopérer avec au moins un des premier et second logements de connecteurs (30, 60) afin de permettre l'insertion du premier logement de connecteur (30) dans le second logement de connecteur (60) uniquement lorsque les premier et second éléments de clavetage (130, 132) sont mis en prise l'un avec l'autre.

9. Ensemble connecteur selon l'une quelconque des revendications précédentes, dans lequel chacun des suiveurs de mécanisme de came (62) est reçu à travers l'ouverture en forme de U (80) formée dans la première partie de connecteur et dans un chemin correspondant parmi les chemins de mécanisme de came (44).

10. Ensemble connecteur selon l'une quelconque des revendications précédentes, dans lequel les chemins de mécanisme de came (44) sont conçus pour coopérer avec les suiveurs de mécanisme de came (62) afin de tirer le premier logement de connecteur (30) vers le second logement de connecteur (60) lorsque le levier (26) est déplacé de la position élevée à la position abaissée, et dans lequel les chemins de mécanisme de came (44) sont conçus pour coopérer avec les suiveurs de mécanisme de came (62) afin de pousser le premier logement de connecteur (30) de façon à l'éloigner du second logement de connecteur (60) lorsque le levier (26) est déplacé de la position abaissée à la position élevée.

11. Procédé d'installation de l'ensemble connecteur selon l'une quelconque des revendications 1 à 10 sur un système électrique de véhicule, le procédé comprenant :
fournir la première partie de connecteur (12) et la seconde partie de connecteur (14) ;
insérer la pluralité de connecteurs de faisceaux de câbles (72) dans le second logement de connecteur (60) ;
disposer de façon préalable la première partie de connecteur (12) sur la seconde partie de connecteur (14) de telle sorte que le premier logement de connecteur (30) soit aligné sur le second logement de connecteur (60) d'une manière prédéterminée ;
déplacer le levier (26) de la position abaissée à la position élevée afin d'aligner une partie d'insertion de chaque chemin de mécanisme de came (44) avec un suiveur correspondant parmi la pluralité de suiveurs de mécanisme de came (62) ; et
déplacer le levier (26) de la position élevée à la position abaissée afin d'entraîner le premier logement de connecteur (30) vers les connecteurs de faisceaux de câbles (72) et de mettre les premières bornes en prise avec les secondes bornes;
la disposition préalable de la première partie de connecteur (12) sur la seconde partie de connecteur comprenant la désactivation d'un dispositif de blocage sur la première partie de connecteur qui empêche le coulissement d'au moins un des chemins de mécanisme de came (44) à partir de la position rétractée, le pivotement du levier à partir de la position abaissée, ou les deux.

12. Procédé selon la revendication 11, comprenant, en outre, le fait de permettre l'insertion du premier logement de connecteur (30) dans le second logement de connecteur (30) uniquement lorsqu'un premier élément de clavetage (130) d'un système de clavetage et un second élément de clavetage du système de clavetage sont en prise l'un avec l'autre, le premier élément de clavetage étant accouplé avec la première partie de connecteur, le second élément de clavetage étant claveté avec la seconde partie de connecteur.

13. Procédé selon la revendication 12, dans lequel le système de clavetage (16) empêche la disposition préalable de la première partie de connecteur sur la seconde partie de connecteur si le premier logement de connecteur n'est pas aligné sur le second logement de connecteur de la manière prédéterminée.

14. Procédé selon l'une quelconque des revendications 11 à 13, comprenant, en outre :
varier une force d'insertion qui est générée lorsque le levier (26) est déplacé de la position élevée à la position abaissée et qu'une force d'entrée donnée est appliquée au levier ; et
maximiser la force d'insertion pour une force d'entrée donnée pendant une partie d'une course des premières bornes qui comprend la mise en prise des premières bornes (36) avec les secondes bornes (6).

15. Procédé selon l'une quelconque des revendications 11 à 14, dans lequel la disposition préalable de la première partie de connecteur (12) sur la seconde partie de connecteur (14) comprend le fait que la pluralité de suiveurs de mécanisme de came (62) sont reçus à travers des ouvertures en forme de U (80) formées dans le logement de chemins de mécanisme de came (22).
